Europäisches Patentamt

European Patent Office

Office européen des brevets

(19)

(11) Numéro de publication: **0 258 126 B1**

(12) **FASCICULE DE BREVET EUROPEEN**

(45) Date de publication de fascicule du brevet:
**06.11.91**

(51) Int. Cl.⁵: **G09B 25/06**

(21) Numéro de dépôt: **87401855.9**

(22) Date de dépôt: **10.08.87**

(54) **Elément modulaire de construction.**

(30) Priorité: **26.08.86 FR 8612065**

(43) Date de publication de la demande:
**02.03.88 Bulletin 88/09**

(45) Mention de la délivrance du brevet:
**06.11.91 Bulletin 91/45**

(84) Etats contractants désignés:
**DE ES FR GB IT SE**

(56) Documents cités:
**DE-A- 1 497 714      DE-A- 1 948 288
DE-A- 2 434 365      DE-B- 1 161 190
FR-A- 2 378 233      FR-A- 2 568 669**

(73) Titulaire: **Dorier, Marcel
"La Vinette" Saint Denis d'Authou
F-28480 Thiron Gardais(FR)**

(72) Inventeur: **Dorier, Marcel
"La Vinette" Saint Denis d'Authou
F-28480 Thiron Gardais(FR)**

(74) Mandataire: **Flavenot, Bernard
Société ABRITT 17, rue du Docteur Charcot
La Norville
F-91290 Arpajon(FR)**

Rank Xerox (UK) Business Services

## Description

La présente invention concerne les éléments modulaires de construction pour la réalisation de corps plus particulièrement de grandes dimensions comme, par exemple, des maquettes d'objets à l'échelle un, ou sensiblement à l'échelle un.

De nombreuses entreprises mettent sur le marché des produits nouveaux qui doivent faire préalablement l'objet d'études très particulières. Tel est le cas dans les industries de l'automobile, de l'aéronautique, de l'espace. Pour pouvoir effectuer ces études, notamment avant de lancer une fabrication de ces nouveaux produits et avant la réalisation d'un prototype, ces industries procèdent à la réalisation d'une maquette, de préférence à l'échelle un, du produit étudié sur papier. Ces maquettes sont généralement réalisées par des sociétés spécialisées dans ce genre de travail, qui ont le savoir-faire et l'outillage voulus.

Ces sociétés utilisent généralement la technique dite "en plein". En fait, elles façonnent du matériau qui se travaille relativement bien comme, par exemple, des panneaux de bois qui sont découpés suivant les cotes, formes et dimensions données par les plans du fabricant. Puis, ces panneaux sont appliqués les uns contre les autres en étant associés éventuellement par collage.

Une maquette ainsi réalisée donne parfaitement le résultat recherché mais il est incontestable qu'elle présente un inconvénient assez grave, son poids. On a donc élaboré des maquettes plus légères en réalisant une armature avec des montants assemblés par tous moyens que l'on recouvre d'une "peau" pour obtenir la forme extérieure souhaitée. Cette réalisation permet d'obtenir une maquette plus légère, certes, mais ne présentant pas la solidité souhaitée pour certaines expériences, ne serait-ce que pour son transport, ce qui est un nouvel inconvénient insurmontable.

Pour tenter d'améliorer la rigidité de ces maquettes, tout en essayant de leur conserver une certaine légèreté, on a réalisé des systèmes de montage, comme celui décrit dans le FR-A-2 378 233. Ce système comporte des modules de base dans la paroi desquels sont pratiqués des orifices cylindriques traversant aptes à recevoir des tiges cylindriques de rigidification. Il s'en suit que les maquettes ainsi réalisées présentent encore un poids relativement élevé.

Aussi, la présente invention a-t-elle pour but de réaliser des éléments de construction modulaires pour la fabrication de produits comme des maquettes, qui aient à la fois la rigidité et la solidité des produits réalisés par la technique "en plein", et la légèreté des produits obtenus par la technique des armatures recouvertes de "peau".

Plus précisément, la présente invention a pour objet un élément modulaire pour réaliser des constructions, comportant un corps comprenant au moins trois faces planes telles que leurs perpendiculaires forment un trièdre et trois groupes de logements en creux de forme cylindrique débouchant chacun sur une desdites faces et comprenant chacun au moins deux logements, la direction des génératrices de chaque logement étant parallèle à la perpendiculaire à la face sur laquelle il débouche, caractérisé par le fait que les deux dits logements ont au moins deux génératrices communes et que la section de chacun suivant un plan parallèle à celui de ladite face forme une courbe partiellement fermée pour pouvoir maintenir latéralement un cylindre de forme complémentaire de celle du logement correspondant, quand il est glissé dans cedit logement.

La présente invention a aussi pour objet un élément modulaire pour réaliser des constructions, comportant un corps de forme extérieure cubique comprenant trois groupes de logements cylindriques ouverts respectivement sur trois faces contiguës dudit cube, chaque groupe de logements cylindriques comportant au moins deux logements dont les génératrices sont perpendiculaires au plan des faces sur lesquelles ils débouchent, caractérisé par le fait que les deux dits logements ont au moins deux génératrices communes et que les sections de ces logements suivant un plan parallèle à ladite face forment des courbes partiellement fermées pour pouvoir maintenir latéralement un cylindre ayant une section complémentaire de celle du logement dans lequel il est glissé.

D'autres caractéristiques et avantages de la présente invention apparaîtront au cours de la description suivante donnée en regard des dessins annexés à titre illustratif mais nullement limitatif, dans lesquels :

- la Figure 1 représente, dans une vue en perspective, un mode de réalisation d'un élément modulaire de construction selon l'invention,
- la Figure 2 représente, dans une vue de face, l'élément modulaire selon la Figure 1,
- la Figure 3 représente, vu de face, un mode de mise en oeuvre de l'assemblage d'éléments modulaires en accord avec les éléments représentés sur les Figures 1 et 2,
- la Figure 4 représente un exemple d'application d'une construction réalisée avec les éléments modulaires tels que ceux représentés sur les Figures 1 à 3, et
- la Figure 5 représente un mode de réalisation avantageux d'une construction avec des éléments modulaires selon les Figures 1 à 3, en coopération avec un élément complémentaire de finition selon l'invention.

L'ensemble des Figures illustrant un même mode de réalisation d'un élément modulaire de construction selon l'invention, les mêmes références y désignent les mêmes éléments, quelle que soit la Figure sur laquelle elles apparaissent.

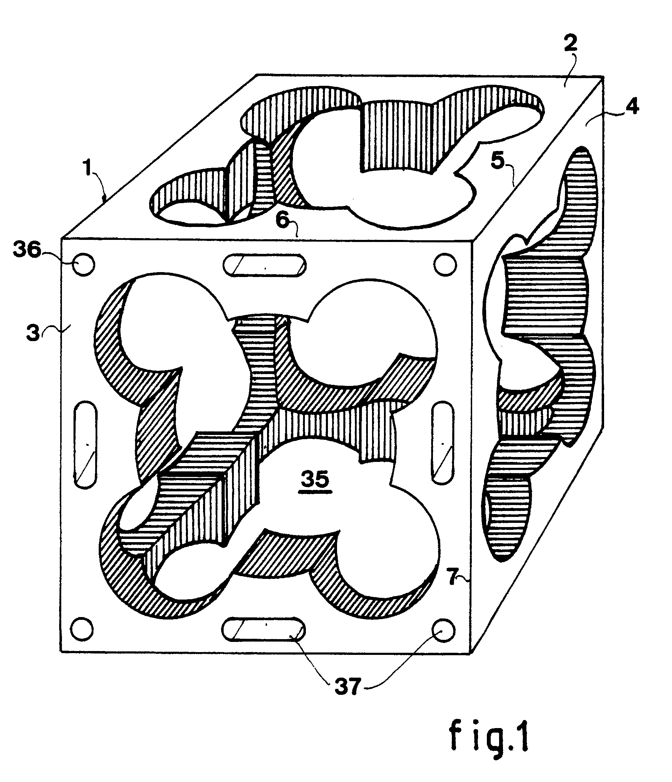

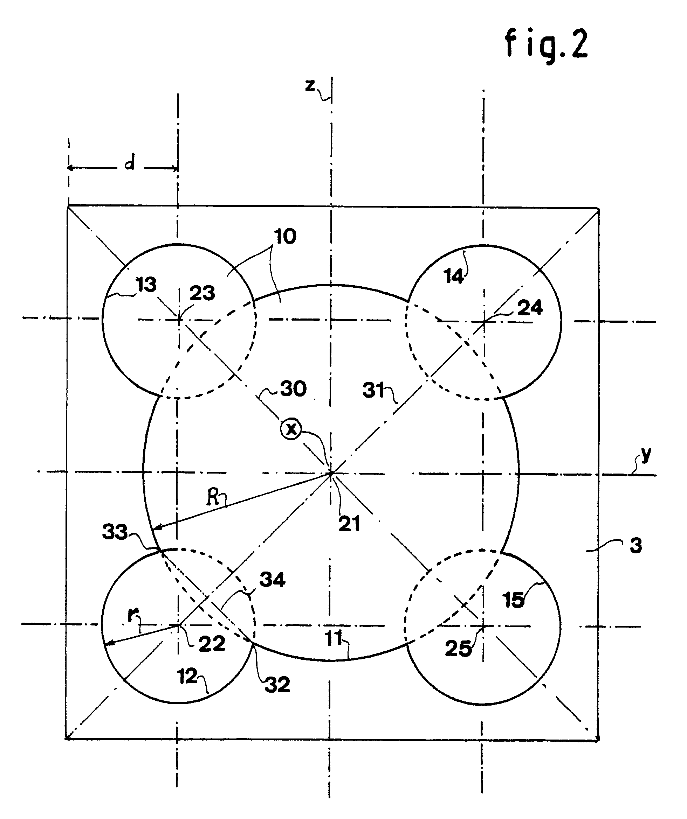

L'élément modulaire représenté plus particulièrement sur les Figures 1 et 2 est constitué d'une pièce de forme cubique 1 définie par au moins trois faces 2, 3, 4, dans ce cas perpendiculaires les unes aux autres. Les perpendiculaires à ces faces déterminent donc, ici, un trièdre rectangle pouvant définir les trois axes de référence couramment dénommés Ox, Oy, Oz. Dans cette pièce cubique, sont réalisés des logements en creux débouchant sur au moins trois faces, ces logements étant de forme cylindrique et chacun ayant une direction de génératrices perpendiculaire à la face sur laquelle il débouche.

Avantageusement, comme dans le cas illustré d'une pièce cubique, chaque logement cylindrique traverse la pièce de part en part et débouche sur deux faces opposées parallèles, comme cela apparaît clairement sur la Figure 1.

Pour pouvoir utiliser ces éléments modulaires pour des constructions comme il sera explicité ci-après, les logements ont des formes identiques et, pour obtenir une rigidité alliée à la légéreté, sur chaque face débouchent au moins deux logements cylindriques qui ont deux génératrices communes de façon à avoir un plan commun de passage d'un logement à l'autre. De plus, comme il sera explicité ci-après, ces logements doivent recevoir des pièces mâles cylindriques complémentaires aptes à s'y enficher et coulisser. La section de chacun de ces deux logements suivant un plan perpendiculaire à ses génératrices a donc une forme concave partiellement fermée pour que, lorsqu'une pièce mâle se trouve dans l'un d'eux, elle ne puisse glisser latéralement dans le logement contigu en passant par le plan commun de passage.

La Figure 2 représente une forme avantageuse de réalisation de tels logements, dans le cas de la forme cubique de base choisie. La pièce cubique 1 comprend alors trois groupes de logements la traversant de part en part suivant trois axes x, y et z correspondant à trois de ses arêtes concourantes 5, 6 et 7. Plus précisément, la Figure 2 représente la section d'un groupe de logements débouchant sur une des six faces de la pièce cubique, en l'occurrence la face 3, les sections de tous les groupes de logements étant identiques.

Ainsi, selon cet exemple de réalisation illustré sur la Figure 2, le groupe de logements 10 comprend cinq logements cylindriques de révolution 11, 12, 13, 14 et 15.

Un premier logement cylindrique 11 dont l'axe 21 est situé sur la droite d'intersection des deux plans diagonaux 30 et 31 a un rayon "R" d'une valeur assez grande pour que la section de ce logement 11 occupe une assez grande surface sur la face 3 du cube 1. Avantageusement, le rayon "R" sera égal au calibre de tubes que l'on trouve facilement dans le commerce et qui est généralement normalisé. A titre d'exemple, pour un cube de longueur d'arête de 10 cm, le rayon "R" sera de 3,15 cm.

Les quatre autres logements 12-15 sont des cylindres de révolution dont les axes 22, 23, 24 et 25 sont respectivement situés dans les deux plans diagonaux 30 et 31 mais extérieurement au cylindre central 11. Ces quatre logements ont des rayons de même dimension "r" nettement inférieure à celle du rayon du logement 11, tout en correspondant, elle aussi avantageusement, au calibre d'un tube de valeur normalisée. En prenant l'exemple mentionné ci-dessus, le rayon "r" sera de 1,6 cm.

Cependant, comme explicité ci-avant, il est nécessaire que le cylindre central 11 ait deux génératrices communes avec chaque cylindre périphérique 12-15 et qu'un tube introduit dans un cylindre périphérique ne puisse pas pénétrer dans le cylindre central par glissement à travers le plan commun de passage. Il faut donc que la distance séparant l'axe 21 du cylindre central 11 de chacun des axes 22-25 des cylindres périphériques soit inférieure à la somme des deux valeurs des rayons "R + r", mais sensiblement supérieure à la valeur du plus grand des rayons, en l'occurrence "R".

Cette caractéristique structurelle permet donc, par exemple, que le logement 11 et le logement 12 aient deux génératrices communes 32 et 33 définissant un plan de passage commun 34 dont la largeur est dans tous les cas inférieure au diamètre du logement 12, et a fortiori à celui du logement 11.

Il est bien évident que, pour des raisons de symétrie dans l'espace et donc de solidité de l'élément, les autres groupes de logements 11-13, 11-14 et 11-15 sont de même configuration.

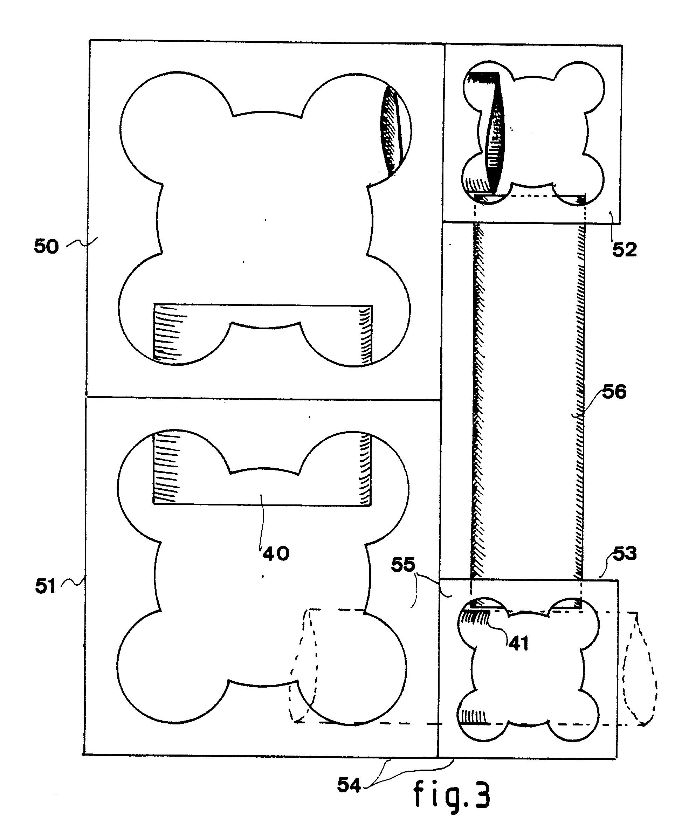

Dans ces conditions, quand dans le logement central 11 est placé un tube cylindrique 40 (Figure 3), ce tube est parfaitement maintenu, du moins latéralement, et ne peut pas glisser dans un logement voisin par le plan commun 34. Réciproquement, quand dans un logement périphérique est introduit un tube 41, ce tube ne peut pas glisser dans le logement central 11 à travers le plan commun 34 (Figure 3).

On voit donc l'avantage d'une telle structure d'un élément modulaire de construction. Du fait des trois groups de logements, le cube est très évidé et perd environ 0,857 de sa masse initiale, tout en conservant de la matière le long de ses arêtes 5, 6, 7, ..., ce qui lui donne la rigidité et la solidité voulues. La partie évidée 35 intérieure à cette forme cubique 1 apparaît nettement sur la Figure 1.

Enfin, il est bien évident que cet élément modulaire pourra être réalisé dans n'importe quel matériau solide, mais avantageusement dans du polycarbonate (P.C.) ou du polyoxyphénylène (P.P.O.) qui donnent un très bon rapport rigidité/poids. De plus, ces matériaux permettent une réalisation industrielle de cas éléments modulaires par moulage, et non pas à l'unité avec un usinage long et coûteux.

Ces éléments modulaires peuvent alors être assemblés les uns aux autres en les superposant face contre face pour pouvoir constituer des volumes importants.

La Figure 3 montre un exemple d'assemblage de deux éléments 50, 51 juxtaposés et solidement associés. Comme mentionné ci-avant, l'assemblage de deux éléments 50, 51 peut se faire en plaçant un tube 40 dans le logement central 11 des deux éléments et en plaquant les deux éléments l'un contre l'autre en les maintenant, si nécessaire, par des points de colle.

L'utilisation d'un tel tube 40 permet, bien entendu, d'améliorer la rigidité, surtout quand il est nécessaire d'assembler une très grande quantité d'éléments modulaires.

Par contre, dans le cas d'assemblage d'un petit nombre d'éléments modulaires, on peut n'utiliser que des fixations ponctuelles externes. A cet effet, les faces des pièces cubiques 1 comportent des encoches 36, 37, ... réparties symétriquement sur la périphérie des ouvertures des groupes de logements. Ces encoches sont aptes à recevoir des clips pouvant coopérer avec deux encoches appartenant respectivement à deux éléments juxtaposés suivant deux de leurs faces. Seules les encoches réparties sur la face 3 de la pièce cubique 1 sont représentées sur la Figure 1, pour des raisons de simplification du dessin. Mais il est bien évident que toutes les autres faces 2, 4, ... du cube en comportent de semblables. Les clips présentent l'avantage par rapport aux tubes 40 d'être plus légers tout en permettant de maintenir les éléments fixés entre eux. Ces clips étant connus en eux-mêmes, il ne seront pas plus amplement décrits ici.

Comme mentionné ci-avant, ces éléments modulaires peuvent être utilisés pour la construction de maquettes, ou analogues, de grandes dimensions. Or, pour l'aspect de certaines de ces maquettes, il peut être intéressant de pouvoir utiliser des éléments molulaires de plus petites dimensions que les cubes de 10 cm d'arête pris comme exemple ci-dessus. Par exemple, peuvent être utiles des éléments modulaires cubiques d'arête de 5 cm comme ceux apparaissant en 52 et 53 sur la Figure 3. Ces éléments modulaires ont avantageusement la même configuration que celle décrite ci-avant en regard des Figures 1 et 2. Par contre, le logement central a un rayon égal à celui d'un logement périphérique 12-15 de l'élément de 10 cm d'arête. Ainsi, pour assembler un élément 52 ou 53 avec un élément tel que celui des Figures 1 et 2 de volume huit fois plus grand, on place un tube 41 dans un logement périphérique 12-15 de la pièce 1 et dans le logement central de l'élément 52-53. Il est alors avantageux de choisir la position des axes 22-25 des logements périphériques 12-15 à une distance "d" égale au quart de l'arête du grand élément modulaire par rapport aux deux faces qui leur sont respectivement le plus proche, et de choisir la valeur du rayon R inférieure à $x/2 \sqrt{2} \approx 0,3535\ x$, si "x" est la mesure de l'arête du cube 1. Dans ce cas la distance des axes 22-25 des logements extérieures à l'arête la plus proche est égale à 0,35355 x.

Ainsi, l'élément 52 ou 53 pourra être associé à l'élément 50 ou 51 en se trouvant donc parfaitement localisé sur un coin d'une face du grand élément et en donnant une continuité de deux surfaces 54 et 55.

Pour certaines applications, on peut même concevoir que deux éléments 52 et 53 puissent être associés l'un à l'autre en étant espacés mais placés sur un même tube 56 comme représenté sur la Figure 3.

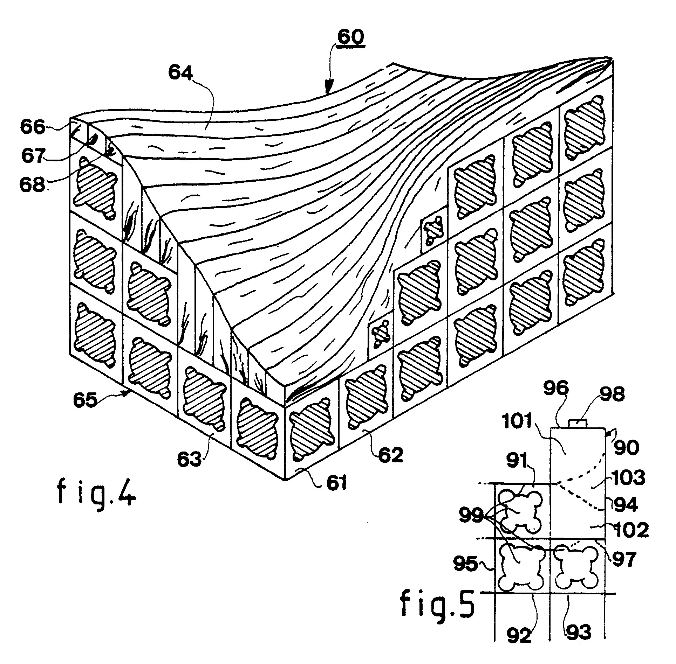

La Figure 4 représente partiellement, à titre d'application, un exemple de réalisation d'un produit en volume 60 utilisant des éléments modulaires comme ceux décrits ci-dessus en regard des Figures 1, 2 et 3.

Pour réaliser un produit 60, on assemble autant d'éléments modulaires 61, 62, 63, ... que nécessaire pour remplir au maximum l'espace contenu dans l'enveloppe finale 64 du produit fini 60, de telle façon que la distance de chaque point de cette enveloppe 64 par rapport à un élément modulaire soit inférieure à la dimension de l'élément modulaire le plus petit pouvant être utilisé, mais que, par contre, aucun des éléments modulaires utilisés ne dépasse de cette enveloppe 64.

L'ensemble 65 de ces éléments 61, 62, 63, ... constitue une forme rigide relativement compacte, facilement réalisable par simple jeu d'empilage et pratiquement indéformable. Quand cette forme est terminée, on dépose sur son pourtour des éléments complémentaires 66, 67, 68, ... comme des lamelles de bois ou autre matériau dont une face est taillée, polie, tranvaillée, ... pour donner au produit fini 60 sa forme voulue.

Dans un mode de réalisation avantageux, ces éléments complémentaires sont obtenus, comme représenté sur la Figure 5, dans des blocs parallélépipédiques rectangles 90 ayant une section carrée égale à celle des éléments modulaires 91, 92, 93 et une longueur 94 égale ou légèrement supérieure au double de l'arête 95 de ces éléments modulaires. Ces éléments complémentaires comportent, sur leurs deux faces d'extrémités 96, 97 les plus éloignées, des moyens 98 leur permettant de coopérer, par exemple par emboîtage, avec les logements en creux 99 des éléments modulaires, ou même les encoches 37 (Figure 1).

Ces éléments complémentaires peuvent ainsi être découpés en deux éléments de finition 101, 102, pour pouvoir former la surface latérale 64, comme décrit en regard de la Figure 4, et cela en perdant le minimum de matière 103.

On voit donc qu'avec les éléments modulaires selon l'invention, auxquels sont avantageusement adjoints des éléments complémentaires de finition, on peut réaliser, par exemple, une maquette ayant l'avantage principal de celle obtenue par la technique en plein, c'est-à-dire la rigidité, et l'avantage donné par la technique de carcasse recouverte d'une "peau", essentiellement la légèreté. Il est aussi à noter que la technique de l'assemblage des éléments modulaires selon l'invention est très simple et ne demande pas l'intervention de techniciens hautement qualifiés.

On peut ainsi réaliser, en particulier, des maquettes légères et solides, même à l'échelle un, de voitures, d'avions, de fusées, etc..., qui ne sont pas fragiles au transport et sur lesquelles les techniciens peuvent travailler sans crainte.

## Revendications

1. Elément modulaire pour réaliser des constructions, comportant un corps (1) comprenant au moins trois faces planes (2, 3, 4) telles que leurs perpendiculaires (x, y, z) forment un trièdre et trois groupes de logements en creux de forme cylindrique débouchant chacun sur une desdites faces et comprenant chacun au moins deux logements (11, 12), la direction des génératrices de chaque logement étant parallèle à la perpendiculaire à la face sur laquelle il débouche, CARACTERISE PAR LE FAIT QUE les deux dits logements ont au moins deux génératrices communes (32, 33) et que la section de chacun suivant un plan parallèle à celui de ladite face forme une courbe partiellement fermée pour pouvoir maintenir latéralement un cylindre (40, 41) de forme complémentaire de celle du logement correspondant, quand il est glissé dans cedit logement.

2. Elément modulaire pour réaliser des constructions, comportant un corps de forme extérieure cubique (1) comprenant trois groupes de logements cylindriques ouverts respectivement sur trois faces contiguës (2, 3, 4) dudit cube, chaque groupe de logements cylindriques comportant au moins deux logements cylindriques (11, 12) dont les génératrices sont perpendiculaires au plan des faces sur lesquelles ils débouchent, CARACTERISE PAR LE FAIT QUE les deux logements ont au moins deux génératrices communes (32, 33) et que les sections de ces logements suivant un plan parallèle à ladite face forment des courbes partiellement fermées pour pouvoir maintenir latéralement un cylindre (40, 41) ayant une section complémentaire de celle du logement dans lequel il est glissé.

3. Elément selon la revendication 2, CARACTERISE PAR LE FAIT QUE lesdits groupes de logements comportent cinq logements cylindriques (11-15).

4. Elément selon la revendication 3, CARACTERISE PAR LE FAIT QUE lesdits cinq logements sont répartis de façon à ce qu'un logement central (11) ait sont axe (21) confondu avec l'intersection des deux plans diagonaux (30, 31) attachés à la face (3) sur laquelle débouchent lesdits logements, les quatre autres logements (12-15) étant répartis à la périphérie dudit logement central (11).

5. Elément selon la revendication 4, CARACTERISE PAR LE FAIT QUE lesdits quatre logements périphériques (12-15) ont leurs axes (22-25) respectivement répartis sur lesdits plans diagonaux (30, 31).

6. Elément selon la revendication 5, CARACTERISE PAR LE FAIT QUE lesdits logements périphériques (12-15) sont situés à égale distance de l'axe (21) dudit logement central (11) et ont tous le même rayon de courbure (r).

7. Elément selon la revendication 6, CARACTERISE PAR LE FAIT QUE la distance séparant les axes (22-25) des logements périphériques de l'axe (21) dudit logement central est inférieure à la somme des longueurs des rayons de courbure (R + r) du logement central et des logements périphériques, et sensiblement supérieure à la valeur du rayon de courbure (R) du logement central.

8. Elément selon l'une des revendications 4 à 7, CARACTERISE PAR LE FAIT QUE ledit logement central (11) a un rayon de courbure (R) nettement supérieur à celui (r) desdits logements périphériques (12-15).

9. Elément selon l'une des revendications 5 à 7, CARACTERISE PAR LE FAIT QUE la distance de l'axe de chaque logement périhérique à l'arête du cube (1) la plus proche est égale à 0,3535 x, si "x" est égal à la longueur de cette arête.

10. Elément selon l'une des revendications 2 à 8, CARACTERISE PAR LE FAIT QUE lesdits logements (11-15) traversent de part en part ledit corps cubique (1), pour déboucher respectivement sur deux faces opposées parallèles.

11. Elément selon l'une des revendications 2 à 9, CARACTERISE PAR LE FAIT QU'il comporte au moins une encoche (36, 37) pour clip réalisée sur la partie plane de chaque face (2, 3, 4) dudit cube.

12. Elément selon l'une des revendications 6 à 7, CARACTERISE PAR LE FAIT QU'il comporte au moins deux pièces cubiques (50,51-52,53) de tailles différentes, la rayon de courbure du logement central de la pièce cubique (52, 53) ayant la longueur d'arête la plus courte étant égal au rayon de courbure des logements périphériques de la pièce cubique (50, 51) ayant le longueur d'arête la plus grande.

13. Elément selon l'une des revendications 2 à 12, CARACTERISE PAR LE FAIT QU'il comporte en outre un élément complémentaire (101,102) découpé dans un bloc parallélépipédique rectangle (90) ayant une section carrée égale à celle dudit corps (1) de forme extérieure cubique et une longueur (94) au moins égale au double de celle de l'arête (95) dudit corps, les deux faces d'extrémités (96,97) les plus éloignées dudit bloc parallélépipédique rectangle comportant des moyens d'emboîtage (98) avec ledit corps.

## Claims

1. A modular block for making constructions, comprising a body (1) having at least three plane faces (2, 3, 4) such that the perpendiculars thereto (x, y, z) form a trihedral and three groups of cylindrically-shaped hollows each opening out into one of said faces and each comprising at least two hollows (11, 12), the generator lines of each of the hollows being parallel with the perpendicular to the face into which it opens out, CHARACTERIZED BY THE FACT THAT said two hollows include at least two generator lines in common (32, 33) and that the section of each of them in a plane parallel to said face forms a partially closed curve suitable for preventing a cylinder (40, 41) of complementary shape to the corresponding hollow from sideways displacement when it is slid into said hollow.

2. A modular block for making constructions, comprising a body (1) whose outer shape is cubic, including three groups of cylindrical hollows opening out respectively in three contiguous faces (2, 3, 4) of said cube, each group of cylindrical hollows including at least two cylindrical hollows (11, 12) whose generator lines are perpendicular to the plane of the faces into which they open out, CHARACTERIZED BY THE FACT THAT the two hollows have at least two generator lines in common (32, 33) and that the cross-sections of said hollows in a plane parallel to said face form partially closed curves suitable for preventing a cylinder (40, 41) of complementary cross-section to the section of a hollow into which it is slid from moving sideways.

3. A block according to claim 2, CHARACTERIZED BY THE FACT THAT said groups of hollows comprise five cylindrical hollows (11-15).

4. A block according to claim 3, CHARACTERIZED BY THE FACT THAT said five hollows are disposed so as a central hollow (11) has its axis (21) which coincides with the intersection of the two diagonal planes (30, 31) attached to the face (3) into which said hollows open out, with the other four hollows (12-15) being distributed around the periphery of said central hollow (11).

5. A block according to claim 4, CHARACTERIZED BY THE FACT THAT said four peripheral hollows (12-15) have their axes (22-25) distributed in respective ones of said diagonal planes (30, 31).

6. A block according to claim 5, CHARACTERIZED BY THE FACT THAT said peripheral hollows (12-15) are situated at equal distances from the axis (21) of said central hollow (11) and all of them have the same radius of curvature (r).

7. A block according to claim 6, CHARACTERIZED BY THE FACT THAT the distance between tote axes (22-25) of the peripheral hollows from the axis (21) of the central hollow is less than the sum of the lengths of the radiuses of curvature (R + r) of the central hollow and of the peripheral hollows, and substantially greater than the value of the radius of curvature (R) of the central hollow.

8. A block according to any one of claims 4 to 7, CHARACTERIZED BY THE FACT THAT said central hollow (11) has a radius of curvature (R) which is considerably greater than the radius of curvature (r) of said peripheral hollows (12-15).

9. A block according to any one of claims 5 to 7, CHARACTERIZED BY THE FACT THAT the distance between the axis of each peripheral hollow from the closest edge of the cube (1) is equal to 0.3535 x, where "x" is equal to the length of said edge.

10. A block according to any one of claims 2 to 8, CHARACTERIZED BY THE FACT THAT said hollows (11-15) go right through said cubic body (1) and respectively open out in two opposite parallel faces.

11. A block according to any one of claims 2 to 9, CHARACTERIZED BY THE FACT THAT it includes at least one clip-receiving notch (36, 37) realized in the plane portion of each face (2, 3, 4) of said cube.

12. A block according to claim 6 or 7, CHARACTERIZED BY THE FACT THAT it comprises at least two cubic parts (50, 51-52, 53) of different sizes, the radius of curvature of the central hollow of the cubic part (52, 53) which has the smallest edge length being equal to the radius of curvature of the peripheral hollows of the cubic part (50, 51) which has the largest edge length.

13. A block according to any one of claims 2 to 12, CHARACTERIZED BY THE FACT THAT it further includes an additional element (101, 102) cut out from a rectangular parallelepiped block (90) having a square section equal to the section of said body (1) whose outer shape is a cube, and having a length (94) not equal to less than twice the length of the edge (95) of said body, the two furthest apart end faces (96, 97) of said rectangular parallelepiped block including means (98) for engaging said body.

## Patentansprüche

1. Modulares Element zum Realisieren von Bauten, umfassend einen Korpus (1) mit mindestens drei ebenen Seiten (2, 3, 4) derart, daß ihre Senkrechten (x, y, z) einen Trieder bilden, und drei Gruppen von hohlen zylinderförmigen Ausnehmungen, die jeweils auf einer der Seiten münden und jeweils mindestens zwei Ausnehmungen (11, 12) umfassen, wobei die Richtung der Mantellinien jeder Ausnehmung parallel zu der Senkrechten auf die Seite, auf der sie münden, ist, DADURCH GEKENNZEICHNET, DASS die Ausnehmungen jeweils mindestens zwei gemeinsame Mantellinien (32, 33) aufweisen und daß der Querschitt von jeder in einer Ebene parallel zu der betreffenden Seite eine teilgeschlossene Kurve bildet zum seitlichen Halten eines Zylinders (40, 41) mit einer zu der Form der entsprechenden Ausnehmung komplementärer Form, wenn er in diese Ausnehmung eingeschoben wird.

2. Modulares Element zum Realisieren von Bauten, umfassend einen Korpus äußerer kubischer Form (1) mit drei Gruppen von zylindrischen Ausnehmungen, die auf drei aneinandergrenzenden Seiten (2, 3, 4) des Kubus offen sind, wobei jede Gruppe zylindrischer Ausnehmungen mindestens zwei zylindrische Ausnehmungen (11, 12) umfaßt, deren Mantellinien senkrecht zur Ebene der Seiten sind, in der sie münden, DADURCH GEKENNZEICHNET, DASS die beiden Ausnehmungen mindestens zwei gemeinsame Mantellinien (32, 33) aufweisen und daß die Querschnitte dieser Ausnehmungen in einer Ebene parallel zu der betreffenden Seite teilgeschlossene Kurven bilden zum seitlichen Halten eines Zylinders (40, 41) mit einem Querschnitt komplementär zu dem der Ausnehmung, in die er eingeschoben ist.

3. Element nach Anspruch 2, DADURCH GEKENNZEICHNET, DASS die Gruppen von Ausnehmungen fünf zylindrische Ausnehmungen (11-15) umfassen.

4. Element nach Anspruch 3, DADURCH GEKENNZEICHNET, DASS die fünf Ausnehmungen derart verteilt sind, daß eine zentrale Ausnehmung (11) ihre Achse (21) mit der Intersektion zweier Diagonalebenen (31, 32), zugeordnet der Seite (3), auf der die Ausnehmungen münden, zusammenfallend aufweist, während die anderen vier Ausnehungen (12-15) an der Peripherie der zentralen Ausnehmung (11) verteilt sind.

5. Element nach Anspruch 4, DADURCH GEKENNZEICHNET, DASS die vier peripheren Ausnehmungen (12-15) mit ihren jeweiligen Achsen (22-25) auf den Diagonalebenen (30, 31) liegend verteilt sind.

6. Element nach Anspruch 5, DADURCH GEKENNZEICHNET, DASS die peripheren Ausnehmungen (12-15) in gleichem Abstand von der Achse (21) der zentralen Ausnehmung (11) angeordnet sind und sämtlich gleichen Krümmungsradius (r) aufweisen.

7. Element nach Anspruch 6, DADURCH GEKENNZEICHNET, DASS der Abstand zwischen den Achsen (22-25) der peripheren Ausnehmungen von der Achse (21) der zentralen Ausnehmung kleiner ist als die Summe der Längen der Krümmungsradien (R + r) der zentralen Ausnehmung und der peripheren Ausnehmungen und deutlich größer ist als der Wert des Krümmungsradius (R) der zentralen Ausnehmung.

8. Element nach einem der Ansprüche 4 bis 7, DADURCH GEKENNZEICHNET, DASS die zentrale Ausnehmung (11) einen Krümmungsradius (R) aufweist, der erheblich größer ist als derjenige (r) der peripheren Ausnehmungen.

9. Element nach einem der Ansprüche 5 bis 7, DADURCH GEKENNZEICHNET, DASS der Abstand der Achse jeder peripheren Ausnehmung von der nächstgelegenen Kubuskante 0,3535x beträgt, wobei "x" gleich der Länge dieser Kante ist.

10. Element nach einem der Ansprüche 2 bis 8, dadurch gekennzeichnet, daß die Ausnehmungen (11-15) den kubischen Korpus (1) beidseits durchsetzen, um jeweils auf zwei einander gegenüberliegenden parallelen Seiten zu münden.

11. Element nach einem der Ansprüche 2 bis 9, DADURCH GEKENNZEICHNET, DASS es mindestens eine Einsenkung (36, 37) für einen Verbinder umfaßt, realisiert auf der ebenen Partie jeder Seite (2, 3, 4) des Kubus.

12. Element nach einem der Ansprüche 6 bis 7, DADURCH GEKENNZEICHNET, DASS es mindestens zwei kubische Teile (50, 51-52, 53) unterschiedlicher Größe umfaßt, wobei der Krümmungsradius der zentralen Ausnehmung des kubischen Teils (52, 53) mit kürzester Kantenlänge gleich dem Krümmungsradius der peripheren Ausnehmungen des kubischen Teils mit größter Kantenlänge ist.

13. Element nach einem der Ansprüche 2 bis 12, DADURCH GEKENNZEICHNET, DASS es ferner ein komplementäres Element (101, 102) umfaßt, geschnitten in einem rechtwinkligen parallelepipedischen Block (90) mit quadratischem Querschnitt gleich dem des Korpus (1) äußerer kubischer Form und mit einer Länge (94), die mindestens doppelt so groß ist wie diejenige der Kante (95) des Korpus, wobei die beiden am weitesten voneinander liegenden Endflächen (96, 97) des parallelepipedischen rechtwinkligen Blocks Einbettungsmittel (98) bezüglich des Korpus aufweisen.

fig.1

fig.2

fig.3

fig.4

fig.5